# EUROPÄISCHE PATENTANMELDUNG

(11) **EP 1 902 900 A2**
(43) Veröffentlichungstag der Anmeldung: **26.03.2008**
(21) Anmeldenummer: 07114084.2
(22) Anmeldetag: 09.08.2007
(51) Int. Cl.: B60R 1/00, B60J 3/04

(54) **Videosystem für ein Fahrzeug und Verfahren zur Funktionsüberprüfung des Videosystems**

(30) Priorität: 21.09.2006 DE 102006044428
(71) Anmelder: ROBERT BOSCH GMBH, 70442 Stuttgart (DE)
(72) Erfinder: Engelberg, Thomas, 31137 Hildesheim (DE); Voelz, Henning, 70176 Stuttgart (DE)

(57) **Zusammenfassung**

Die Erfindung betrifft ein Videosystem für ein Kraftfahrzeug, wobei das Videosystem (1) mindestens aufweist:
eine Videokamera (2) zur Erfassung eines Fahrzeugumfeldes und Ausgabe von Bildsignalen (S4),
eine variabel-transparente Einrichtung (5), die vorzugsweise an einer zwischen der Videokamera (2) und dem Fahrzeugumfeld angeordneten transparenten Scheibe (3) des Kraftfahrzeuges vorgesehen ist und eine variable, steuerbare Lichttransmission aufweist, und
eine Steuereinrichtung (6), die verschiedene Tönungsgrade (T) der variabel-transparenten Einrichtung (5) einstellt und bei den verschiedenen Tönungsgraden (T) die Bildsignale (S4) aufnimmt und auswertet.

Weiterhin ist ein Verfahren zur Funktionsüberprüfung des Videosystems (1) vorgesehen.

## Beschreibung

Die Erfindung betrifft ein Videosystem für ein Fahrzeug und ein Verfahren zur Funktionsüberprüfung des Videosystems.

### Stand der Technik

Videokameras in Fahrzeugen werden zunehmend auch für Fahrerassistenzsysteme genutzt. Das Videokamerasystem dient hierbei im Allgemeinen der Darstellung der Fahrzeugumgebung.

Bei Innen- und Außenspiegeln von Fahrzeugen sind weiterhin elektrochromatische Systeme bekannt, bei denen auf der Glasscheibe eine elektrochromatische Gelschicht aufgebracht ist, deren Tönungsgrad abhängig von einer angelegten Spannung variiert. Hierdurch kann der Abblendfaktor des Spiegels verändert werden. Eine derartige Maßnahme ist insbesondere hilfreich, wenn die Schweinwerfer nachfolgender Fahrzeuge durch ihre Blendwirkung stören.

Hierbei ist zum einen im Spiegelgehäuse des Spiegels eine in Fahrtrichtung orientierte erste Fotozelle vorgesehen, die die Lichtintensität im Fahrzeugvorfeld misst, und zum anderen im Spiegelglas eine zweite Fotozelle vorgesehen, die die Lichtintensität der Blendung misst. Ein elektronisches Regelsystem vergleicht beide Lichtstärken. Je höher der Unterschied der beiden Lichtstärken ist, desto größer ist die Blendwirkung. Durch den Vergleich kann erreicht werden, dass die Spiegel nur auf eine Blendung durch nachfolgende Fahrzeuge reagieren und nicht z.B. auch auf starke Sonneneinstrahlung.

Die DE 102 01 520 A1 beschreibt ein Verfahren und eine Vorrichtung zur Bildfehlererkennung und -anzeige bei Bildaufnahmesystemen, insbesondere im Kraftfahrzeug. Hierdurch kann eine Selbstdiagnose der Kameras für Videoüberwachungssysteme durchgeführt werden, die sich auf die Detektion von Ausfällen elektronischer Komponenten oder des Bildsensors selbst beziehen, wobei ein Vergleich mit einem vorgespeicherten Referenzwert durchgeführt wird und bei Erkennen eines Bildfehlers ein Fehlersignal ausgegeben wird.

### Offenbarung der Erfindung

Der Erfindung liegt der Gedanke zugrunde, eine Selbstüberwachung des Kamerasystems durchzuführen, bei dem verschiedene Einstellungen des Tönungsgrades bzw. des Transmissionswertes einer variabel- transmittierenden Einrichtung (VLP) eingestellt und jeweils von der Videokamera Bilder aufgenommen werden. Die Bildsignale können somit nachfolgend in Abhängigkeit des jeweiligen Tönungsgrades ausgewertet werden, um hieraus Rückschlüsse auf die Funktionsfähigkeit bzw. mögliche Fehler zu ziehen.

Hierbei sind unterschiedliche Tests bzw. Selbstüberwachungsverfahren möglich. Erfindungsgemäß können als mögliche Fehlerquelle eine optische Abdeckung bzw. Verdeckung der transparenten Scheibe des Fahrzeuges durch einen Gegenstand, Verschmutzung oder Beschlag, weiterhin ein Defekt der Kameraregelung oder der Videokamera und eine Defokussierung oder Dejustierung bzw. fehlerhafte Positionierung der Videokamera erkannt werden.

Bei Durchführung mehrerer Tests kann zwischen diesen verschiedenen Fehlerquellen unterschieden werden. Vorteilhafterweise kann die variabeldurchlässige Schicht ergänzend von der Innenseite des Kameragehäuses her beleuchtet werden, wozu im Kameragehäuse als Lichtquelle eine LED vorgesehen sein kann. Hierdurch kann zwischen einem Fehler in der Kamera bzw. Kameraregelung und einer Verdeckung bzw. Abdeckung von Außen differenziert werden. Falls bei Änderung des Tönungsgrades keine Änderung im Bildsignal bzw. in den eingestellten Kameraparametern der Kameraregelung festgestellt wird, könnte dies zunächst an einer vollständigen Verdeckung der Fahrzeugscheibe oder einer fehlerhaften Kamera bzw. Kameraregelung liegen. Bei nachfolgender Durchführung einer weiteren Testreihe mit vollständiger Verdunkelung der elektrochromatischen Schicht und Beleuchtung von Innen bei verschiedenen Beleuchtungsstärken bzw. Intensitätswerten kann zwischen diesen beiden Fehlerquellen differenziert werden.

### Erfindungsgemäß ergeben sich somit einige Vorteile:

Es kann eine Funktionsüberprüfung, d.h. Überprüfung der Funktionsfähigkeit eines Kamerasystems selbsttätig durchgeführt werden, um die Einsatzbereitschaft bzw. Funktionsfähigkeit zu überprüfen. Die Überprüfung kann vor Fahrtantritt und/oder während der Fahrt durchgeführt werden.

Somit können auch videobasierte Fahrerassistenzsysteme realisiert werden, bei denen die von der Videokamera erzeugten Bildsignale nicht nur darstellend, sondern auch warnend oder sogar in die Fahrzeugdynamik eingreifend wirken.

Die unterschiedlichen Überwachungsverfahren können selbsttätig durchgeführt werden. Bei Feststellung einer Fehlerquelle können sie selbsttätig wiederholt werden und gegebenenfalls aufwendige zusätzliche Verfahren durchgeführt werden. Bei Erkennen eines Fehlers kann ein entsprechendes Fehlersignal ausgegeben werden, das den Fahrer auf die fehlende Funktionsfähigkeit seines Kamerasystems hinweist.

Das erfindungsgemäße Verfahren und die erfindungsgemäße Vorrichtung können ohne relevanten zusätzlichen Hardwareaufwand realisiert werden. Eine Videokamera, die elektrochromatische Schicht und die Steuereinrichtung sind im Allgemeinen bereits vorhanden, so dass gegebenenfalls lediglich zusätzlich die Lichtquelle zur Innenbeleuchtung der elektrochromatischen Schicht vorzusehen ist.

### Kurze Beschreibung der Zeichnungen

- Fig. 1: zeigt den Aufbau einer erfindungsgemäßen Vorrichtung zur Funktionsüberprüfung;
- Fig. 2: zeigt ein Diagramm des von der Videokamera ermittelten Helligkeitsgrades in Abhängigkeit eines eingestellten Tönungsgrades einer elektrochromatischen Scheibe;
- Fig. 3 a, b: zeigt Darstellungen des von der Videokamera erfassten Videobildes bei zwei Überprüfungsschritten;
- Fig. 4: zeigt ein Flussdiagramm eines erfindungsgemäßen Verfahrens.

### Ausführungsformen der Erfindung

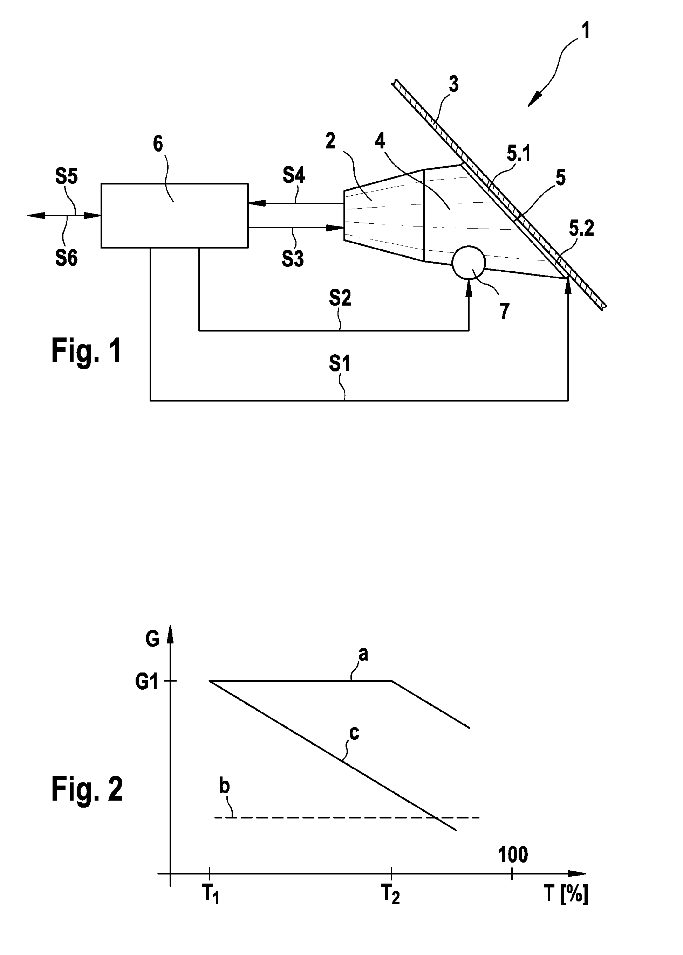

Ein erfindungsgemäßes Videosystem 1 in einem Fahrzeug weist gemäß Fig. 1 eine Videokamera 2 auf, die hinter einer Windschutzscheibe 3 des Fahrzeuges angeordnet ist und ein Umfeld des Fahrzeuges, insbesondere den Fahrbahnbereich vor dem Fahrzeug, erfasst. Die Videokamera 2 weist ein Kameragehäuse 4 auf, dass dicht an die Windschutzscheibe 3 anschließt. Der Bereich der Windschutzscheibe 3, der das Kameragehäuse 4 nach vorne abschließt, ist auf seiner Vorder- oder Rückseite mit einer elektrochromatischen Schicht 5 versehen, die auf ein von einer Steuereinrichtung 6 ausgegebenes erstes Steuersignal S1 hin stufenlos mit einem Tönungsgrad von 0 bis 100 % verdunkelt werden kann. Die Windschutzscheibe 3 kann auch außerhalb ihres das Kameragehäuse 4 abdeckenden Bereichs elektrochromatisch ausgebildet sein; für das nachfolgende Selbstüberwachungsverfahren werden diese weiteren Bereiche jedoch nicht abgedunkelt. In einer Variante ist die elektrochromatische Schicht 5 auf einem Träger als variabel-transparente Einrichtung zwischen der Videokamera 2 und der Windschutzscheibe angeordnet.

Die Videokamera 2 gibt Bildsignale S4 an die Steuereinrichtung 6 aus; die Steuereinrichtung 6 steuert mit zweiten Steuersignalen S2 eine im Kameragehäuse 4 vorgesehene LED 7 an, die auf den Bereich der Windschutzscheibe 3 innerhalb des Kameragehäuses 4 gerichtet ist, und gibt weiterhin dritte Steuersignale S3 an die Videokamera 2 zur Einstellung verschiedener Kameraparameter aus, z. B. der Belichtungszeit und der Aperturöffnung (Blendenöffnung). Die Steuereinrichtung 6 ist hier als Funktionsblock wiedergegeben; sie kann entsprechend auch mehrteilig sein, d.h. es können verschiedene Steuereinheiten zur Ausgabe der ersten Steuersignale 1 zur Verdunkelung bzw. zur Variation des Tönungsgrades T der elektrochromatischen Schicht 5 und zur Ausgabe der Steuersignale S2 und S3 vorgesehen sein.

Die Steuereinrichtung 6 tauscht über z. B. den CAN-Bus Signale S5 mit anderen fahrzeuginternen Einrichtungen aus; hierbei kann sie die Bildsignale S4 oder aus Bildsignalen S4 gewonnene Daten, z. B. auch Warnsignale oder Fehlersignale S6 an ein Fahrerassistenzsystem oder eine Fahrdynamikregelung ausgeben und von einer anderen Steuereinrichtung zum Starten des Selbstüberwachungsverfahrens entsprechend angesteuert wird.

Die elektrochromatische Schicht 5 kann z.B. durch eine Gel-Schicht 5 gebildet werden, deren Tönungsgrad bzw. Transmissionswert stufenlos variiert werden kann. Als Steuersignal S1 dient hierbei eine an die elektrochromatische Schicht 5 angelegte elektrische Spannung, was dem Fachmann bekannt ist und hier nicht weiter ausgeführt wird.

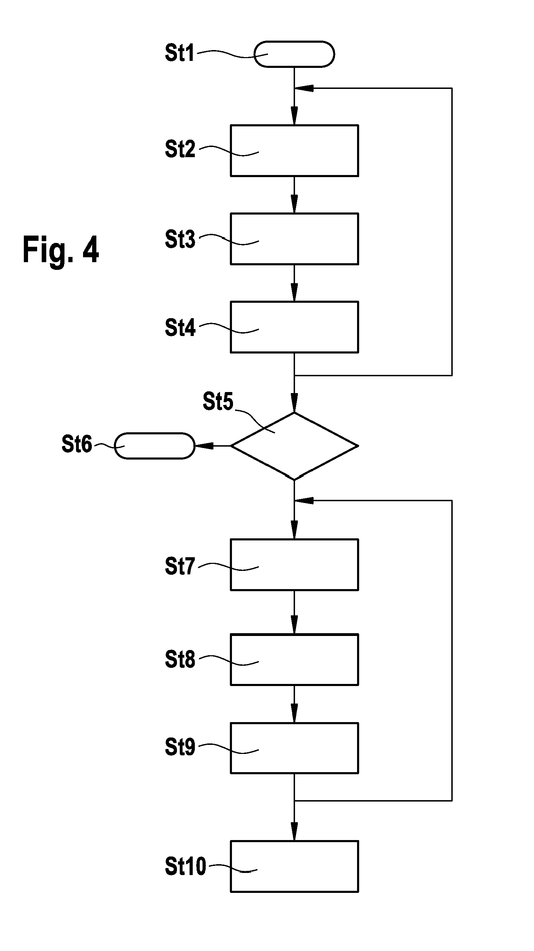

Erfindungsgemäß wird ein Selbstüberwachungsverfahren z.B. beim Starten des Fahrzeuges über ein entsprechendes Steuersignal S5 hin initiiert, wie in Schritt St1 des Flussdiagramms der Fig. 4 gezeigt ist. Die Steuereinrichtung 6 führt hierbei sukzessive eines oder mehrere der nachfolgenden Testverfahren durch:

### 1. Variation der Transmission mit Kameraregelung:

Die Steuereinrichtung 6 variiert den Tönungsgrad T gemäß Fig. 2 innerhalb eines vorgegebenen Bereichs, z.B. zwischen 0 und 100 %; was als Schritt St2 der Fig. 4 gezeigt ist.

Hierbei führt sie eine Kameraregelung auf einen gleich bleibenden mittleren Grauwert G1 der Bildsignale S4 durch, d.h. sie nimmt in Schritt St3 zu jedem Tönungsgrad T Bildsignale S4 der Videokamera 2 auf, errechnet hieraus den mittleren Grauwert der Helligkeit und steuert in Schritt St4 mittels der Steuersignale S3 eine Stellgröße, d.h. einen Kameraparameter der Videokamera 2, z.B. die Belichtungszeit oder Blendenzahl (Aperturöffnung), um den konstanten mittleren Grauwert G1 der horizontalen Linie in Fig. 2 einzuregeln. Die Schritte St2, St3, St4 beschreiben somit eine Schleife.

Zunächst werden somit die Bildsignale S4 ohne eine Aktivierung der elektrochromatischen Schicht 5 aufgenommen und der Kameraparameter ausgelesen. Nachfolgend wird der Tönungsgrad der elektrochromatischen Schicht 5 nach und nach verdunkelt, so dass weniger Licht auf den internen Imager der Videokamera 2 gelangt. Die Regelung der Videokamera 2 mitsamt ihrer Steuereinrichtung 6 reagiert auf diese veränderten Bedingungen z.B. durch eine Verlängerung der Belichtungszeit oder Vergrößerung der Apertur. Die Kameraparameter werden entsprechend ausgelesen und in Schritt St5 mit den Parametern der zuvor aufgenommenen Situation verglichen. Ist eine Änderung mit dem zu erwartenden Verhalten nachzuweisen, so ist der Test erfolgreich bestanden und kann in Schritt St6 beendet werden. Fig. 2 zeigt eine entsprechende Messkurve a des mittleren Grauwertes G, bei der von einem Anfangs-Tönungsgrad T1=0 der Grauwert G1 eingeregelt wird und bei zunehmenden Tönungsgrad T bis T2 konstant bleibt. Bei T2 wird die maximale Belichtungszeit der Kamera 2 (bei Fahrerassistenzsystemen z.B. 40 ms) bzw. maximale Aperturöffnung erreicht, so dass keine Regelung dieses Parameters mehr stattfinden kann und der Grauwert G unter den eingestellten mittleren Grauwert G1 abfällt. Das Bild wird somit dunkler und knickt in Fig. 2 nach unten ab.

Bei diesem Selbstüberwachungsverfahren können bereits verschiedene Fehler erkannt werden:

Wenn die Kameraparameter der Regelung nicht verändert werden, so fällt mit zunehmendem Tönungsgrad der mittlere Grauwert G ab, was in Kurve c gezeigt ist.

Falls gemäß Kurve b der mittlere Grauwert G konstant auf einem sehr dunklen Wert bleibt, so kann das Sichtfeld der Kamera vollständig durch einen Gegenstand, z. B. ein Laubblatt verdeckt sein oder aber die Videokamera 2 gar kein Bild liefern, d.h. defekt sein.

In diesen Fällen, kann gemäß der zweiten Abzweigung des Schrittes St5 eine Warnmeldung erzeugt, d.h. ein Warnsignal S6 ausgegeben werden.

Erfindungsgemäß kann weiterhin auch der Grauwert G geändert werden, so dass in Fig. 2 nicht auf einen festen mittleren Grauwert G eingeregelt wird, sondern z.B. eine abfallende oder ansteigenden Linie.

### 2. Variation einer internen Beleuchtung mit Kameraregelung:

Dieses Testverfahren ist insbesondere relevant, wenn bei dem unter 1. beschriebenen ersten Testverfahren ein Fehler gemäß Kurve b festgestellt wird, eine genauere Differenzierung jedoch noch nicht möglich ist.

Hierzu wird in Schritt St7 die elektrochromatische Schicht 5 vollständig abgedunkelt, d.h. Tönungsgrad T=100%. Die LED 7 wird in Schritt St8 über Steuersignale S2 nachfolgend derartig angesteuert, dass sie unterschiedliche Beleuchtungsstärken erzeugt, in denen von der Kamera 2 in Schritt St9 jeweils Bilder aufgenommen und die in der Schleife St7, St8, St9 gewonnenen Bildsignale S4 sowie die Kameraparameter der Regelung von der Steuereinrichtung 6 in Schritt St10 ausgewertet werden. Wird von der LED 7 mehr Licht ausgegeben, so wird bei funktionsfähiger Kamera 2 das Bild heller und die Kameraregelung reagiert entsprechend mit z.B. einer Verkürzung der Belichtungszeit oder Verkleinerung der Apertur. Mit diesem Test kann somit festgestellt werden, ob die Kamera 2 funktionsfähig ist und weiterhin die Kameraregelung generell unter definierten Bedingungen funktioniert. Da die Windschutzscheibe 3 vollständig verdunkelt ist, gehen Beeinträchtigungen des Kamerasichtfeldes, z.B. durch ein Blatt auf der Windschutzscheibe 3, nicht in die Messung ein und können auch nicht festgestellt werden.

Eine fehlerhaftes Videosystem bzw. Kamerasystem kann von einer Verdunklung des Kamerasichtfeldes somit durch das unter 2. beschriebene Test verfahren unterschieden werden. Ergibt sich bei beiden Tests, d.h. dem ersten Testverfahren bei zunehmendem Tönungsgrad T und dem zweiten Testverfahren bei abnehmender Lichtstärke (und vollständiger Verdunklung) die gleiche Kennlinie, so liegt ein Fehler im Videosystem vor. Ist die Kennlinie unterschiedlich, liegt die Störung auf der Windschutzscheibe vor.

### 3. Konstante Kameraparameter, Variation der Tönung:

Werden bei dem Test die Kameraparameter, d.h. die Belichtungszeit und die Aperturblende, konstant gehalten und der Tönungsgrad T variiert, so nimmt mit zunehmenden Tönungsgrad der mittlere Grauwert G gemäß Kurve c linear ab. Hierdurch kann somit überprüft werden, ob die Videokamera 2 (bzw. ihr Imager) und die elektrochromatische Schicht 5 ordnungsgemäß arbeiten und ob die Windschutzscheibe 3 durch einen Gegenstand verdeckt wird. Falls bei diesem Test die Kurve b ermittelt wird, kann wiederum durch einen Test entsprechend dem zweiten Testverfahren, aber bei konstanten Kameraparametern, zwischen einer Verdeckung und defektem Videosystem unterschieden werden.

### 4. Test der Einbauposition in der Kamera:

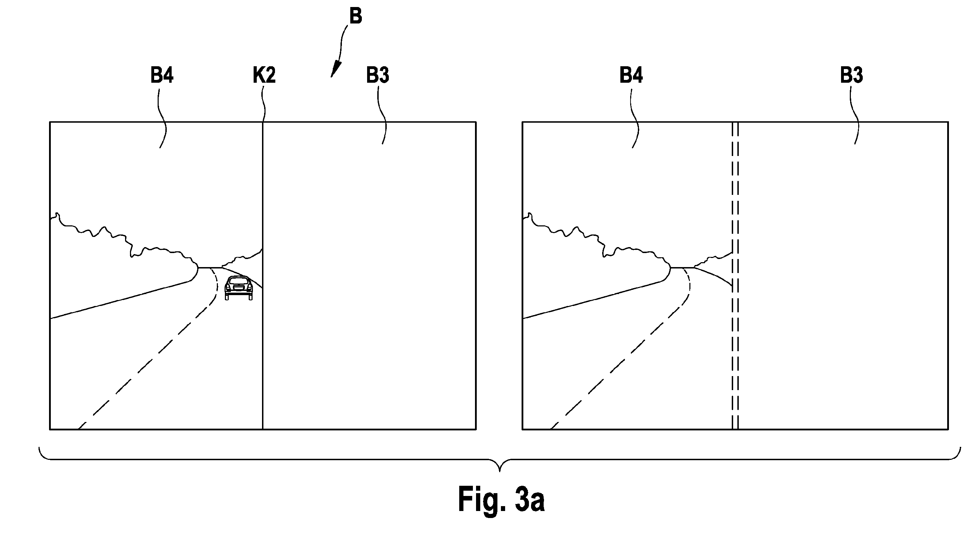

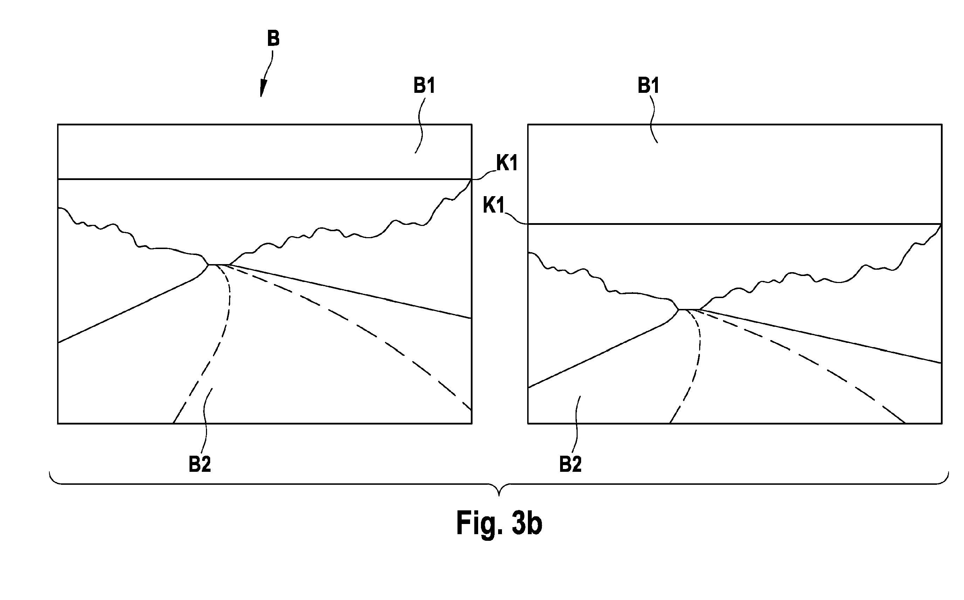

Die Kamera 2 ist im Fahrzeug in einer bestimmten Einbauposition montiert und für diese Position kalibriert, d.h. ihre Lage ist bzgl. eines Referenzpunktes und einer Referenzachse des Fahrzeuges bestimmt. Das Assistenzsystem funktioniert nur einwandfrei, wenn sich die Lage der Kamera 2 nicht ändert. Zu dieser Überprüfung wird erfindungsgemäß gemäß Fig. 3a ein Teilbereich der elektrochromatischen Schicht 5, z.B. ein oberer Teilbereich 5.1 vollständig abgedunkelt und der untere Teilbereich 5.2 vollständig durchlässig, so dass gemäß der linken Darstellung von Fig. 3b bei ordnungsgemäßer Position der Kamera 2 in dem Bild B der obere Bildbereich B1 dunkel und der untere Bildbereich B2 hell ist, wobei eine Bildkante K1 an einer vorgegebenen Stelle des Bildes B liegen sollte. Verrutscht die Kamera 2, so ist z. B. gemäß der rechten Darstellung von Fig. 3b die Bildkante K1 an einer anderen Position bzw. in einem anderen Winkel als vorher.

Die ordnungsgemäße Position der Bildkante K1 ist einmal am Anfang nach dem Einbau zu bestimmen, um sie nachfolgend als Referenz zu verwenden.

Dieser vierte Test kann am Anfang des Selbstüberprüfungsverfahrens durchgeführt werden. Wird in dem Test festgestellt, dass die Einbauposition sich nicht geändert hat, so kann das Fahrerassistenzsystem gestartet werden. Wird eine Änderung festgestellt, so kann überprüft werden, ob diese Änderung innerhalb vorgegebener Toleranzwerte ist. Liegt die Änderung innerhalb der Toleranzwerte, so wird vorteilhafterweise eine Warnung in einen Fehlerspeicher geschrieben. Liegt sie außerhalb der Toleranzwerte, so kann z.B. ein Warnsignal S6 oder Fehlersignal ausgegeben werden, in dem der Fahrer aufgefordert wird, die nächste Fachwerkstatt aufzusuchen um den Fehler korrigieren zu lassen.

### 5. Test auf die Fokussierung:

Die Fokussierung der Kamera 2 ist werksmäßig so eingestellt, dass ein bestimmter Entfernungsbereich scharf abgebildet wird. Die eingestellte Kamerafokussierung kann sich verstellen, was erfindungsgemäß überprüft wird.

Hierzu wird gemäß Fig. 3a ein Teil der elektrochromatischen Schicht 5, z.B. eine seitliche Hälfte, abgedunkelt, so dass eine scharfe Kante K2 zwischen einem dunklen seitlichen Bildbereich B3 und einem hellen seitlichen Bildbereich B4 erzeugt wird. Die Steuereinrichtung 6 wertet die aufgenommenen Bildsignale S4 nachfolgend mit einer Bildverarbeitung aus, so dass ein Maß bzw. eine Bewertungszahl für die Schärfe dieser Kante K2 erzeugt werden kann. Dieses Maß bzw. diese Bewertungszahl ist am Anfang nach dem Einbau einmal als Referenzwert initial zu bestimmen, wobei dies automatisch im Rahmen einer Initialisierungsprozedur erfolgen kann.

Nachfolgend wird bei dem erfindungsgemäßen Selbstüberwachungsverfahren wiederum diese Testprozedur durchlaufen, in dem der Teilbereich B3 vollständig abgedunkelt und die Lage der Kante K2 ermittelt und mit dem Referenzwert verglichen wird. Ist eine signifikante Abweichung zu erkennen, so kann dies darauf hindeuten, dass sich die Kamerafokussierung verstellt hat und die Kamera defokussiert ist. Eine weitere Ursache könnte z.B. eine Verschmutzung des Objektivs oder eine von innen beschlagene Scheibe 3 sein. Bei Erkennen eines Fehlers wird wiederum ein Fehlersignal S6 ausgegeben.

## Patentansprüche

1. Videosystem für ein Kraftfahrzeug, wobei das Videosystem (1) mindestens aufweist:
eine Videokamera (2) zur Erfassung eines Fahrzeugumfeldes und Ausgabe von Bildsignalen (S4),
eine variabel-transparente Einrichtung (5), die vorzugsweise an einer zwischen der Videokamera (2) und dem Fahrzeugumfeld angeordneten transparenten Scheibe (3) des Kraftfahrzeuges vorgesehen ist und eine variable, steuerbare Lichttransmission aufweist, und eine Steuereinrichtung (6), die verschiedene Tönungsgrade (T) der variabel-transparenten Einrichtung (5) einstellt und bei den verschiedenen Tönungsgraden (T) die Bildsignale (S4) aufnimmt und auswertet.

2. Videosystem nach Anspruch 1, **dadurch gekennzeichnet, dass** die Steuereinrichtung (6) aus den Tönungsgraden (T) und aus den Bildsignalen und/oder aus den Bildsignalen (S4) ermittelten Kameraparametern eine Funktionsfähigkeit des Videosystems beurteilt und bei Festellen einer fehlerhaften Funktionsfähigkeit ein Warnsignal oder Fehlersignal (S6) ausgibt.

3. Videosystem nach Anspruch 1 oder 2, **dadurch gekennzeichnet, dass** in oder an einem Kameragehäuse (4) der Videokamera (2) eine lichtaussendende Einrichtung (7) zur Beleuchtung der variabel- transparenten Einrichtung (5) von der Innenseite her vorgesehen ist und die Steuereinrichtung (6) die lichtaussendende Einrichtung (7) ansteuert.

4. Videosystem nach einem der vorherigen Ansprüche, **dadurch gekennzeichnet, dass** die variabel- transparente Einrichtung (5) eine an der Vorder- oder Hinterseite der transparenten Scheibe (3) ausgebildete elektrochromatische Schicht (5) ist und die Steuereinrichtung (6) zur Einstellung des Tönungsgrades (T) eine elektrische Spannung an die elektrochromatische Schicht (5) anlegt.

5. Videosystem nach einem der vorherigen Ansprüche, **dadurch gekennzeichnet, dass** die variabel- transparente Einrichtung (5) mindestens zwei Teilbereiche (5.1, 5.2) aufweist, an denen unterschiedliche Tönungsgrade (T) einstellbar sind.

6. Fahrerassistenzsystem mit einem Videosystem nach einem der vorherigen Ansprüche, dessen Steuereinrichtung (6) Steuersignale (S6) zum Eingriff in die Fahrzeugdynamik des Fahrzeuges ausgibt.

7. Verfahren zur Funktionsüberprüfung eines Videosystems (1) eines Fahrzeuges,
bei dem unterschiedliche Tönungsgrade (T) einer variabellichtdurchlässigen Einrichtung (5) eingestellt werden,
bei den unterschiedlichen Tönungsgraden (T) von einer Videokamera (2) Bildsignale (S4) ausgegeben werden, und
aus den Tönungsgraden (T) und aus den Bildsignalen und/oder Kameraparametern, die aus den Bildsignalen (S4) ermittelt werden, eine Funktionsüberprüfung vorgenommen wird.

8. Verfahren nach Anspruch 7, **dadurch gekennzeichnet, dass** in einem Testverfahren die variabel-lichtdurchlässige Einrichtung (5) vollständig verdunkelt wird und von innen mit unterschiedlichen Lichtintensitäten beleuchtet wird und bei den unterschiedlichen Lichtintensitäten von der Videokamera (2) Bildsignale (S4) ausgegeben und ausgewertet werden.

9. Verfahren nach Anspruch 8, **dadurch gekennzeichnet, dass** in jeder eingestellten Lichtintensität eine Kameraregelung auf einen mittleren Grauwert (G1) durch Einstellung eines Kameraparameters, z.B. der Belichtungszeit oder der Blendenöffnung, durchgeführt wird und die ermittelten Kameraparameter, die eingestellten Lichtintensitäten und die erreichten mittleren Grauwerte (G) ausgewertet werden.

10. Verfahren nach einem der Ansprüche 7 bis 9, **dadurch gekennzeichnet, dass** in einem Testverfahren unterschiedliche Tönungsgrade (T) eingestellt werden und bei jedem Tönungsgrad (T) eine Kameraregelung auf einen mittleren Grauwert (G1) durchgeführt wird und die eingestellten Tönungsgrade (T), die jeweils eingestellten Kameraparameter (G) und die erreichten mittleren Grauwerte (G) ausgewertet werden.

11. Verfahren nach Anspruch 10, **dadurch gekennzeichnet, dass** aus einer Verringerung des mittleren Grauwertes (G) bei höheren Tönungsgraden (T) auf einen seinen minimalen oder maximalen Wert angenommenen Parameter, z.B. die Belichtungszeit oder der Blendenöffnung, geschlossen wird.

12. Verfahren nach einem der Ansprüche 7 bis 11, **dadurch gekennzeichnet, dass** in einem Testverfahren die Kameraparameter konstant gehalten werden und die Tönungsgrade (T) variiert werden und ein ermittelter Grauwert des Bildsignals (S4) in Abhängigkeit des Tönungsgrades mit einer Referenzkurve oder Referenzfunktion verglichen wird.

13. Verfahren nach einem der Ansprüche 7 bis 12, **dadurch gekennzeichnet, dass** in einem Testverfahren ein Teilbereich (5.1) der variabel-durchlässigen Schicht (5) verdunkelt und der andere Teilbereich (5.2) unverdunkelt eingestellt wird und von der Videokamera (2) ausgegebene Bildsignale (S4) mit Referenzbildern verglichen werden.

14. Verfahren nach Anspruch 13, **dadurch gekennzeichnet, dass** eine Position und/oder Neigung einer Kante (K2) zwischen einem hellen Bildteil (B4) und einem dunklen Bildteil (B3) mit einem Referenzwert verglichen wird und aus der Position und/oder Neigung der Kante (K1, K2) ermittelt wird, ob eine eingestellte Kameraposition ordnungsgemäß ist.

15. Verfahren nach Anspruch 13 oder 14, **dadurch gekennzeichnet, dass** aus einer Schärfe einer Kante (K2) zwischen einem hellen Bildteil (B2) und einem dunklen Bildteil (B1) überprüft wird, ob die Fokussierung der Videokamera (2) ordnungsgemäß eingestellt ist.

16. Verfahren nach einem der Ansprüche 7 bis 15, **dadurch gekennzeichnet, dass** aus Messungen bei unterschiedlichen Tönungsgraden (T) und/oder unterschiedlichen Llchtintensitäten Funktionen oder Kurven gebildet werden, die mit Referenzfunktionen oder Referenzkurven verglichen werden.
